# NEUE EUROPÄISCHE PATENTSCHRIFT

(11) **EP 1 409 185 B2**
(45) Veröffentlichungstag und Bekanntmachung des Hinweises auf die Entscheidung über den Einspruch: **15.06.2011**
(45) Hinweis auf die Patenterteilung: 24.08.2005
(21) Anmeldenummer: 02764705.6
(22) Anmeldetag: 17.07.2002
(51) Int. Cl.: B23G 7/02

(54) **GEWINDEFORMER ODER -BOHRER**
THREAD FORMER OR TAP
OUTIL DE FORMAGE DE FILET OU TARAUD

(30) Priorität: 25.07.2001 DE 10136293
(43) Veröffentlichungstag der Anmeldung: 21.04.2004
(73) Patentinhaber: Fette GmbH, 21493 Schwarzenbek (DE)
(72) Erfinder: MÜLLER, Wolfgang, 21493 Schwarzenbek (DE)
(74) Vertreter: Hauck Patent- und Rechtsanwälte
(86) Internationale Anmeldenummer: PCT/EP2002/007913
(87) Internationale Veröffentlichungsnummer: WO 2003/011508

(56) Entgegenhaltungen:
- WO-A1-98/19813
- DE-A- 1 950 718
- DE-A- 3 537 087
- DE-A- 3 537 087
- DE-A- 3 934 621
- DE-C- 3 448 086
- DE-U- 29 818 546
- GB-A- 1 209 196
- GB-A- 2 324 752
- GB-A- 2 324 752
- GB-B- 1 209 196
- JP-A- 52 069 075
- JP-A- 62 127 729
- US-A- 3 803 691
- US-A- 5 678 962
- US-A- 6 146 060

## Beschreibung

Die Erfindung bezieht sich auf einen Gewindeformer oder -bohrer nach dem Oberbegriff des Patentanspruchs 1. Ein solcher Gewindeformer ist aus Dokument GB-A-1209196 bekannt.

Es ist bekannt, Innengewinde mit Hilfe eines Gewindebohrers oder Gewindeformers zu erzeugen. Gewindebohrer entstehen aus einem Schraubenbolzen, indem man durch das Einbringen von achsparallelen oder schrägen Spannuten Schneiden erzeugt. Im Einlaufbereich ist ein sogenannter Anschnitt vorgesehen, der zumeist kegelig ausgebildet ist. Das Loch im Werkstück wird mit dem Kerndurchmesser vorgebohrt.

Gewindeformer werden geometrisch ebenfalls von einem Schraubenbolzen hergeleitet. Sie zerspanen jedoch keinen Werkstoff, sondern verdrängen ihn nur. Das Werkstück wird daher mit dem mittleren Flankendurchmesser vorgebohrt. Der Gewindeformer hat an der Spitze ein ansteigendes Profil, das den Werkstoff zunehmend verdrängt.

Es ist bekannt, die Verschleißfestigkeit von Gewindeformern durch Werkstoffauswahl und Wärmebehandlung zu verbessern. Besondere Vorteile bringt hierbei das Beschichten mit Titannitrid (Maschinenmarkt, Würzburg 92 (1986) 40 Seiten 88 bis 92). Es ist jedoch auch bekannt, Gewindeformer aus Hartmetall zu formen (Maschine + Werkzeug 12/95 Seiten 26 bis 28).

Aus DE 39 34 621 C2 ist ein Gewindeformer bekannt geworden mit einem zylindrischen Einspannschaft und einem Formgebungsbereich mit von der Kreisform abweichendem, polygonalem Querschnitt sowie mit dem herzustellenden Gewinde entsprechenden Gewindefurchen am Außenumfang. Im Bereich der Querschnittsecken des Formgebungsbereichs sind zylindrische Leisten aus besonders hartern und verschleißfestem Werkstoff in korrespondierende, axial verlaufende Nuten eingelötet, die eine den Gewindefurchen angepaßte Profilierung am Außenumfang aufweisen. Gewindeformer haben das gleiche Crewindeprofil wie Gewindebohrer, weisen jedoch in ihrem Profilabschnitt einen polygonalen Querschnitt auf mit beispielsweise drei oder sechs "Ecken".

Der Profilabschnitt von Gewindeformern und -bohrern weist einen ersten formenden Bereich auf, mit dem im wesentlichen das Gewinde hergestellt wird sowie einen nachfolgenden Führungsabschnitt. Dieser dient der Führung des Werkzeugs beim Rückdrehen aus der Bohrung nach Fertigstellung des Innengewindes.

Gewindeformer und -bohrer sind relativ aufwendig zu fertigen und bestehen unter Umständen aus einem hochwertigen Werkstoff. Nach Verschleiß oder Beschädigung ist das Werkzeug nicht mehr brauchbar.

Der Erfindung liegt die Aufgabe zugrunde, einen Gewindeformer oder -bohrer zu schaffen, der mit einem geringeren Aufwand an Material und Fertigung hergestellt werden kann.

Diese Aufgabe wird durch die Merkmale des Patentanspruchs 1 gelöst.

Bei dem erfindungsgemäßen Werkzeug ist der Form- oder Schneidprofilabschnitt als separates Profilelement ausgebildet, dass außer einem Einlauf- bzw. Anschnittkegel mindestens zwei volle Profil gänge aufweist und mittels einer Befestigungsvorrichtung zentrisch und unverdrehbar am Schaft befestigbar ist.

Das Profilelement ist plattenförmig und wiest eine kurze axiale Länge auf; außer dem Einlauf- bzw. Anschnittkegel weist es relativ wenige volle Profilgänge auf, zum Beispiel zwei bis vier.

Der Schaft fiir das erfindungsgemäße Werkzeug ist in herkömmlicher Weise und herkömmlichen Abmessungen aus einem hoch belastbarem Material, insbesondere einem geeigneten Stahl gefertigt. Er braucht bei Verschleiß des Profilelements nicht fortgeworfen zu werden, sondern kann häufig wiederverwendet werden. Die Erfindung ermöglicht auch die Bereitstellung einer Mehrzahl unterschiedlicher Profilelemente mit unterschiedlichem Durchmesser, unterschiedlicher Steigung und so weiter, die jeweils mit einem Einheitsschaft verbunden werden können. Das Profilelement besteht aus einem geeigneten harten Werkstoff. Dadurch ist der Materialeinsatz signifikant geringer als bei herkömmlichen Werkzeugen.

Vom Schaft auf das Profilelement ist ein relativ hohes Drehmoment zu übertragen. Am Ende des Schaftes und auf der dem Schaft zugekehrten Seite des Profilelements sind erfindungsgemäß Vorsprünge und/oder Vertiefungen geformt, die formschlüssig ineinandergreifen. Diese Vorsprünge und Vertiefungen sind zugleich so geformt, dass sie eine automatische Zentrierung bewirken, wenn das Profilelement am Schaft angesetzt wird.

Die Vorsprünge und Vertiefungen weisen komplementäre seitliche zur Achse des Schaftes bzw. des Profilelements geneigte Flächen auf, die zum Zwecke der Zentrierung und Drehmomentübertragung in Eingriff stehen. Diese Flächen können plan oder ballig ausgebildet sein. Vorzugsweise stehen nur die erwähnten Flächen in Eingriff, was bedeutet, daß die Endflächen von Profilelement und Schaft einen Abstand voneinander haben, wenn das Profilelement am Schaft angebracht ist.

Die Flächen sind an Rippen bzw. Nuten geformt, die kreuzweise radial angeordnet sind, wobei der Mittelpunkt des Kreuzes auf der Achse des Schaftes bzw. des Profilelements liegt. Um das Ansetzen des Profilelements zu erleichtern, können die " Kanten der Rippen und Nuten eine Fase aufweisen. [0016] Bei der Erfindung wurde erkannt, dass bei modernen Werkzeugmaschinen mehr oder weniger lange Führungsabschnitte bei Grewindeformern und bohrern nicht mehr erforderlich sind, um das Werkzeug beim Herausdrehen aus der hergestellten Gewindebohrung herauszudrehen, ohne das Gewinde zu beeinträchtigen.

Als Werkstoff für das Profilelement kann Hartmetall, Keramik, oder ein sonstiger bekannter Werkstoff zur Anwendung gelangen. Es versteht sich, dass der Außendurchmesser des Schaftes beim Gewindeformer zumindest etwas kleiner sein muß als der Kerndurchmesser des zu erzeugenden Gewindes. Ein Schaft kann jedoch durchaus für Profilelemente zur Herstellung unterschiedlicher Gewindegrößen eingesetzt werden.

Es sind verschiedene Möglichkeiten denkbar, eine Befestigung des getrennten Profilelements am Schaft vorzunehmen. Eine besteht nach einer Ausgestaltung der Erfindung darin, dass das Profilelement mittels einer Schraube in einer axialen Gewindebohrung am Schaft befestigt ist. Das Profilelement weist dementsprechend eine mittige Bohrung auf, wobei die Schraube z. B. einen konischen Abschnitt aufweist, der mit einer konischen Ansenkung der Bohrung des Profilelements zusammenwirkt. Die Schraube leistet keinen Beitrag zur Drehmomentübertragung vom Schaft auf das Werkstück.

Alternativ kann ein Gewindezapfen am Schaft geformt werden, der entweder mit einer Gewindebohrung des Profilelements zusammenwirkt, oder es ist eine Mutter vorgesehen, die auf den Zapfen aufgeschraubt wird zur Befestigung des Profilelements am Schaft.

Schließlich kann das Profilelement auch am Schaft angelötet sein. In diesen Fall ist jedoch die Auswechselbarkeit erschwert, da das Profilelement erst erwärmt werden muß, wann es vom Schaft entfernt werden soll.

Die Erfmdung wird nachfolgend an Hand von in Zeichnungen dargestellten Ausführungsbeispielen näher erläutert.
- Fig. 1: zeigt die Seitenansicht eines Schaftes für ein erfindungsgemäßes Gewindeformwerkzeug.
- Fig. 2: zeigt die Stirnansicht des Schaftes nach Fig. 1.
- Fig. 3a: zeigt die Seitenansicht des Schaftes nach Fig. 2, während Fign. 3b und 3c Einzelheiten wiedergeben.
- Fig. 4: zeigt die Draufsicht auf ein Profilelement nach der Erfindung.

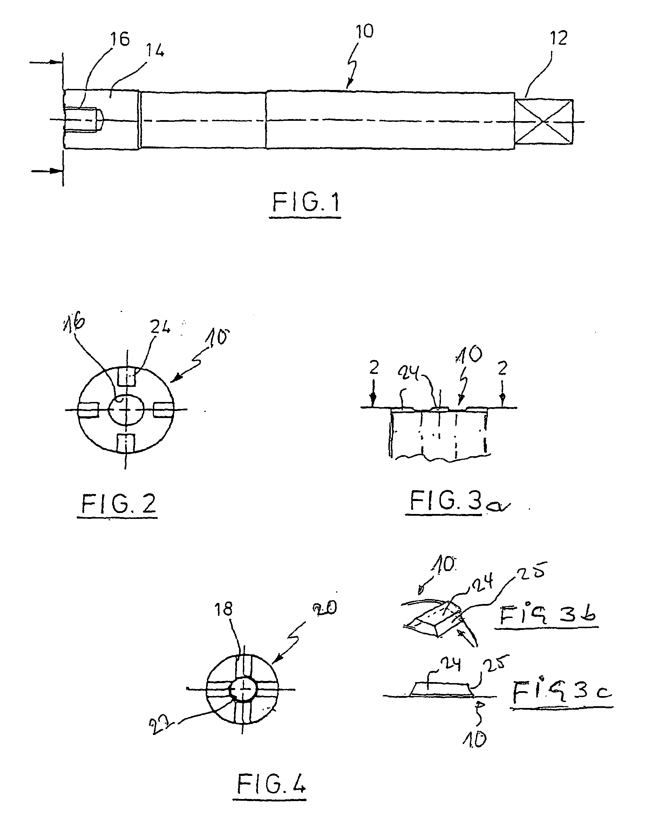

In Fig. 1 ist ein Werhzeugschaft 10 dargestellt, der an einem Ende einen Einspannabschnitt 12 und am anderen Ende einen Abschnitt 14 aufweist zur Verbindung mit einem Profilelement nach Fig. 4. Aus der Endansicht des Schaftes 10 nach Fig. 2 ist erkennbar, dass er eine zentrische Gewindebohrung 16 aufweist und kreuzförmig angeordnete Rippen 24, wobei das Kreuz der Rippen 24 in seinem Mittelpunkt mit der Achse des Schaftes 10 bzw. der Bohrung 16 zusammenfällt.

In der Fig. 4 ist ein plattenförmiges Formprofilelement 20 dargestellt, das an seinem Umfang einen Anformkegel sowie ein Gewindeprofil (nicht gezeigt) aufweist zur Herstellung eines Innengewindes nach dem Gewindefurch- oder -formverfahren. Der Umfang des Formprofilelements 20 ist polygonal, was in Fig. 4 nicht dargestellt ist. Bezüglich weiterer Einzelheiten des Profilelements 20 wird noch in Verbindung mit den Fign. 5 und 6 eingegangen.

Das Profilelement 20 besitzt eine mittige Durchbohrung 22 und auf einer Seite kreuzförmig radial angeordnete Nuten 18. Die Nuten 18 sind so angeordnet und ausgebildet, dass sie passend die Rippen 24 aufnehmen. Zur leichteren Einführung weisen die Nuten 18 und/oder die Rippen 24 an den Längskanten eine Fase auf. Durch den formschlüssigen Eingriff von Rippen 24 und Nuten 18 wird ein Formschluß erzielt, während die übrige Fläche des Profilelements 20 an der übrigen Fläche der Endfläche des Schaftes 10 entweder plan anliegt oder vorzugsweise einen gewissen Abstand von letzterer hat. Durch die Bohrung 22 wird der Schaft einer Schraube, wie sie in Fig. 9 bei 26 dargestellt ist, eingeführt und in die Gewindebohrung 16 eingeschraubt, um das Profilelement 20 fest und unverdrehbar mit dem Schaft 10 zu verbinden. Auf diese Weise ist ein zweiteiliges Gewindeformwerkzeug hergestellt, und es ist durch Lösen der Schraube 26 auf einfache Weise möglich, ein anderes Profilelement am Schaft 10 anzubringen.

Aus den Einzeldarstellungen nach den Fign. 3b und 3c ist zu erkennen, daß die Vorsprünge oder Rippen 24 im Schnitt trapezförmig sind, d. h. schräge Seitenflächen aufweisen, wie eine bei 25 dargestellt ist. Die Nuten 18 sind mit komplementären Seitenflächen versehen (nicht gezeigt), so daß beim Ansetzen des Profilelements 20 an das Schaftende 14 lediglich die Flächen 25 der Rippen 24 und der Nuten miteinander in Eingriff gebracht werden, nicht aber die Endflächen von Schaft 10 und Profilelement 20. Da die radialen Rippen 24 und die radialen Nuten 18 senkrecht aufeinander stehen, findet automatisch eine Zentrierung des Formelements 20 am Schaft 10 statt, denn die Flächen 25 und die komplementären Flächen der Nuten verlaufen parallel zu Durchmessern, die aufeinander senkrecht stehen. Der Kreuzungspunkt der Durchmesser liegt naturgemäß auf der Achse vom Profilelement 20 und Schaft 10.

Im gezeigten Fall sind die Flächen 25 plan. Sie können jedoch auch ballig sein und in gleicher Weise die gewünschte Zentrier- und Drehmomentübertragungswirkung aufweisen.

## Patentansprüche

1. Cewindeformer oder -bohrer mit einem Schaft, der an einem Ende einen Einspannabschnitt und am anderen Ende einen Form- oder Schneidprofilabsclmitt aufweist, wobei der Form- oder Schneidprofilabschnitt als separates Profilelement (20, 40) ausgebildet ist, und mittels einer Befestigungsvorrichtung zentrisch und unverdrehbar am Schaft (10) befestigbar ist, wobei das Profilelement (20, 40) nur eine geringe axiale Länge und außen einen Einlauf- bzw. Anschnittkegel aufweist, **dadurch gekennzeichnet, daß** am Ende des Schaftes (10) Rippen (24) und auf der dem Schaft (10) zugekehrten Seite des plattenförmigen Profilelements (20) zu den Rippen (24) komplementäre Nuten (18) geformt sind, die formschlüssig ineinandergreifen, daß eine automatische Zentrierung des Profilelements (20) am Schaft (10) erfolgt, wenn das Profilelement (20) am Schaft (10) angesetzt wird, wobei die Rippen (24) und Nuten (18) seitlich zur Achse des Schaftes (10) bzw. des Profilelements (20) geneigte Flächen aufweisen, die zum Zweck der Drehmomentübertragung in Eingriff stehen und die Rippen (24) und die Nuten (18) kreuzweise radial so angeordnet sind, daß der Mittelpunkt des Kreuzes auf der Achse des Schaftes (10) bzw. des Profilelements (20) liegt, wobei der Schaft (10) aus einem bezüglich Biegung und Torsion hoch beanspruchbaren Material, insbesondere aus Stahl und das Profilelement (20, 40) aus einem geeigneten Hartstoff besteht.

2. Grewindeformer oder -bohrer nach Anspruch 1, **dadurch gekennzeichnet, daß** die Flächen plan oder ballig sind.

3. Gewindeformer oder -bohrer nach Anspruch 1, **dadurch gekennzeichnet, daß** erste Flächen parallel zu einem ersten Durchmesser verlaufen und zweite Flächen parallel zu einem zweiten Durchmesser verlaufen, der auf dem ersten Durchmesser senkrecht steht, wobei der Kreuzungspunkt der Durchmesser auf der Achse des Profilelements oder des Schaftes liegt.

4. Gewindeformer oder -bohrer nach einem der Ansprüche 1 bis 3, **dadurch gekennzeichnet, daß** das Profilelement (20, 40) mittels einer zentrischen Schraube (26) in einer axialen Gewindebohrung (16) am Schaft (10) befestigt ist.

5. Gewindeformer oder -bohrer nach einem der Ansprüche 1 bis 3, **dadurch gekennzeichnet, daß** der Schaft einen zentrischen Gewindezapfen aufweist und das Profilelement eine mittige Bohrung, durch welche sich der Gewindezapfen hindurch erstreckt und die mittige Bohrung ein Gewinde aufweist oder eine Mutter vorgesehen ist zur Befestigung des Profilelements auf dem Zapfen.

6. Gewindeformer oder bohrer nach einem der Ansprüche 1 bis 3, **dadurch gekennzeichnet, daß** das Profilelement am Schaft angelötet ist.

7. Gewindeformer oder -bohrer nach einem der Ansprüche 1 bis 6, **dadurch gekennzeichnet, daß** das Profilelement insgesamt nicht mehr als zwei bis vier volle Gewindeformgänge aufweist.

## Claims

1. Cold thread forming tap or screw tap with a shaft, said shaft having a chuck portion at the one end and a forming or cutting profile portion on the other end, the forming or cutting profile portion being realised as a separate profile element (20, 40) and being fixable centrically and secured against rotation on the shaft (10) by means of a fixing device, wherein the profile element (20, 40) has only a small axial length and on the outside a lead-in or starting tap cone, respectively, **characterised in that** ribs (24) are formed at the end of the shaft (10) and grooves (18), being complementary to the ribs (24), are formed on that side of the plate-shaped profile element (20) facing the shaft (10), which interlock in a positively fitting manner, that an automatic centring of the profile element (20) takes place on the shaft (10) when the profile element (20) is put onto the shaft (10), wherein the ribs (24) and grooves (18) have complementary lateral areas, inclined with respect to the axis of the shaft (10) and the profile element (20), respectively, which are in gearing for the purpose of transmission of torque and the ribs (24) and grooves (18) arc disposed radially crosswise, the centre point of the cross being on the axis of the shaft (10) or the profile element (20), respectively, wherein the shaft (10) consists of a material highly strainable with respect to bending and torsion, particularly of steel, and the profile element (20, 40) consists of a suitable hard material.

2. Cold thread forming tap or screw tap according to claim 1, **characterised in that** the areas are plane or crowned.

3. Cold thread forming tap or screw tap according to claim **characterised in that** first areas run parallel to a first diameter and second areas run parallel to a second diameter which stands perpendicular on the first diameter, the crossing point of the diameters being on the axis of the profile element or the shaft.

4. Cold thread forming tap or screw tap according to any one of claims 1 to 3, **characterised in that** the profile element (20, 40) is fixed on the shaft (10) by a centric screw (26) in an axial thread bore (16).

5. Cold thread forming tap or screw tap according to any one of claims 1 to 3, **characterised in that** the shaft has a centric threaded pin and the profile element has a centric bore through which the threaded pin extends, and that the centric bore has a thread or that a screw nut is provided for the attachment of the profile element on the pin.

6. Cold thread forming tap or screw tap according to any one of claims 1 to 3, **characterised in that** the profile element is soldered on the shaft.

7. Cold thread forming tap or screw tap according to any one of claims 1 to 6, **characterised in that** the profile clement docs not have more than two to four complete thread forming convolutions.

## Revendications

1. Outil de taraudage par déformation ou par coupe comprenant une queue, qui présente à une extrémité une section de serrage et à l'autre extrémité une section de profil de déformation ou de coupe, dans lequel la section de profil de déformation ou de coupe se présente sous la forme d'un élément de profil séparé (20, 40) et peut être fixée centriquement sur la queue (10) moyennant un dispositif de fixation de manière à résister à la torsion, dans lequel l'élément de profil (20, 40) présente seulement une faible longueur axiale et extérieurement une entrée conique ou un chanfrein conique, **caractérisé en ce qu'**à l'extrémité de la queue (10), on trouve des filets (24) et, du côté de l'élément de profil en forme de plaque qui est tourné vers la queue, des rainures (18) complémentaires aux filets (24), qui s'engrènent l'un dans l'autre par liaison de forme de sorte à entraîner un centrage automatique de l'élément de profil (20) sur la queue (10) lorsque l'élément de profil (20) est appliqué sur la queue (10), **en ce que** les filets (24) et les rainures (18) présentent des surfaces inclinées latéralement par rapport à l'axe de la queue (10) ou de l'élément de profil (20), qui s'engrènent l'un dans l'autre pour la transmission du couple et **en ce que** les filets (24) et les rainures (18) sont disposés radialement en croix de sorte que le point central de la croix se trouve sur l'axe de la queue (10) ou de l'élément de profil (20), la queue (10) étant constituée d'un matériau hautement sollicitable résistant à la flexion et à la torsion, en particulier d'acier, et l'élément profilé (20, 40) d'un matériau dur approprié.

2. Outil de taraudage par déformation ou par coupe selon la revendication 1, **caractérisé en ce que** les surfaces sont planes ou bombées.

3. Outil de taraudage par déformation ou par coupe selon la revendication 1, **caractérisé en ce que** de premières surfaces suivent un tracé parallèle à un premier diamètre et **en ce que** de secondes surfaces suivent un tracé parallèle à un second diamètre, lequel est perpendiculaire au premier diamètre, le point de croisement des diamètres se situant sur l'axe de l'élément de profil ou de la queue.

4. Outil de taraudage par déformation ou par coupe selon l'une quelconque des revendications 1 à 3, **caractérisé en ce que** l'élément de profil (20, 40) est fixe sur la queue (10) au moyen d'une vis centrique (26) dans un perçage fileté axial (16).

5. Outil de taraudage par déformation ou par coupe selon l'une quelconque des revendications 1 à 3, **caractérisé en ce que** la queue présente un tourillon fileté central et **en ce que** l'élément de profil présente un perçage central, à travers lequel le tourillon fileté passe, et **en ce que** le perçage central présente un filet ou **en ce qu'**un écrou est prévu pour fixer l'élément de profil sur le tourillon.

6. Outil de taraudage par déformation ou par coupe selon l'une quelconque des revendications 1 à 3, **caractérisé en ce que** l'élément de profil est soudé à la queue.

7. Outil de taraudage par déformation ou par coupe selon l'une quelconque des revendications 1 à 6, **caractérisé en ce que** l'élément de profil ne présente au total pas plus de deux à quatre tours de filet complets.
